# EUROPEAN PATENT APPLICATION

(11) **EP 4 557 833 A1**
(43) Date of publication of application: **21.05.2025**
(21) Application number: 22950666.2
(22) Date of filing: 14.07.2022
(51) Int. Cl.: H04W 40/12

(54) **SWITCHING METHOD AND APPARATUS**

(71) Applicant: Beijing Xiaomi Mobile Software Co., Ltd., Beijing 100085 (CN)
(72) Inventor: XIONG, Yi, Beijing 100085 (CN); YANG, Xing, Beijing 100085 (CN)
(74) Representative: Stöckeler, Ferdinand
(86) International application number: PCT/CN2022/105832
(87) International publication number: WO 2024/011545

(57) **Abstract**

Disclosed in the embodiments of the present application are a switching method and apparatus. The method comprises: receiving switching configuration information, which is sent by a first network device; and executing path switching on the basis of a target relay terminal device and according to the switching configuration information, such that when a remote terminal device establishes a connection to the target relay terminal device, the remote terminal device can acquire a serving cell of the target relay terminal device, and then execute path switching. Therefore, the success rate of path switching can be effectively improved, the communication time delay can be reduced, and the communication efficiency of a system can be improved.

## Description

### FIELD

The disclosure relates to the field of communication technology, in particular to a switching method and a switching apparatus.

### BACKGROUND

A relay technology refers to a technology where a terminal device is not connected directly to a network device but communicates with the network device via a relay of another terminal device. The terminal device connected to the network device via the other terminal device is called as a remote terminal device, and the terminal device providing a relay function is called as a relay terminal device. A direct connection of the terminal device with the network device is called direct link, and a connection of the terminal device with the network device via the relay terminal device is called indirect link.

In the related art, the remote terminal device is only supported to execute path switching between the direct link and the indirect link, and the network device communicating with the remote terminal device remains unchanged.

### SUMMARY

An embodiment of a first aspect of the disclosure provides a switching method, executed by a first terminal device, including:
receiving switching configuration information sent by a first network device; and
executing path switching according to the switching configuration information and based on a target relay terminal device.

Optionally, the switching configuration information includes at least one of:
an identifier of the target relay terminal device; an identifier of at least one target cell; an identifier of at least one target network device; or an identifier of the first terminal device.

Optionally, the executing the path switching according to the switching configuration information and based on the target relay terminal device includes:
establishing a connection with the target relay terminal device according to the switching configuration information.

Optionally, the switching method further includes:
obtaining a current serving cell and/or a current serving network device of the target relay terminal device.

Optionally, in response to the at least one target cell including the current serving cell, and/or in response to the at least one target network device including the current serving network device, the switching method further includes:
establishing a connection with the current serving network device of the target relay terminal device via the target relay terminal device.

Optionally, in response to the at least one target cell not including the current serving cell, and/or in response to the at least one target network device not including the current serving network device, the switching method further includes at least one of:
initiating a Radio Resource Control (RRC) connection reestablishment; disconnecting the connection with the target relay terminal device; recovering a connection with the first network device; entering an idle state; or initiating a cell reselection.

Optionally, in response to the path switching including switching to an indirect link, determining that the switching configuration information includes at least one of: an identifier of the target relay terminal device; an identifier of at least one target cell; an identifier of at least one target network device; or an identifier of the first terminal device.

Optionally, the switching configuration information is included in an RRC message.

Optionally, the identifier of the at least one target cell and/or the identifier of the at least one target network device are included in at least one of:

RRC reconfiguration information; Sidelink (SL) path switching configuration information; RRC synchronization reconfiguration information; cell group configuration information; or special cell (spCell) configuration information.

An embodiment of a second aspect of the disclosure provides a switching method, executed by a first network device, including:
sending switching configuration information to a first terminal device.

The switching configuration information is used to execute path switching based on a target relay terminal device.

Optionally, the switching configuration information includes at least one of:
an identifier of the target relay terminal device; an identifier of at least one target cell; an identifier of at least one target network device; or an identifier of the first terminal device.

Optionally, the switching configuration information is used by the first terminal device to establish a connection with the target relay terminal device.

Optionally, the switching method further includes:
in response to the first terminal device being going to execute the path switching, or in response to the first terminal device being going to execute the switching to an indirect link, determining that the switching configuration information includes at least one of: an identifier of the target relay terminal device; an identifier of at least one target cell; an identifier of at least one target network device; or an identifier of the first terminal device.

Optionally, the switching method further includes:
in response to the first terminal device not executing the path switching based on the target relay terminal device, determining that the switching configuration information does not include any of:
the identifier of the target relay terminal device; the identifier of at least one target cell; the identifier of at least one target network device; or the identifier of the first terminal device.

Optionally, the switching configuration information is included in an RRC message.

Optionally, the identifier of the at least one target cell and/or the identifier of the at least one target network device are included in at least one of:
RRC reconfiguration information; SL path switching configuration information; RRC synchronization reconfiguration information; cell group configuration information; or spCell configuration information.

An embodiment of a third aspect of the disclosure provides a switching apparatus, applied to a first terminal device. The switching apparatus includes:
a transceiver unit, configured to receive switching configuration information sent by a first network device; and
a processing unit, configured to execute path switching according to the switching configuration information and based on a target relay terminal device.

Optionally, the switching configuration information includes at least one of:
an identifier of the target relay terminal device; an identifier of at least one target cell; an identifier of at least one target network device; or an identifier of the first terminal device.

Optionally, the processing unit is specifically configured to:
establish a connection with the target relay terminal device according to the switching configuration information.

Optionally, the transceiver unit is further configured to:
obtain a current serving cell and/or a current serving network device of the target relay terminal device.

Optionally, in response to the at least one target cell including the current serving cell, and/or in response to the at least one target network device including the current serving network device, the processing unit is further configured to:
establish a connection with the current serving network device of the target relay terminal device via the target relay terminal device.

Optionally, in response to the at least one target cell not including the current serving cell, and/or in response to the at least one target network device not including the current serving network device, the processing unit is further configured to execute at least one of:
initiating an RRC connection reestablishment; disconnecting the connection with the target relay terminal device; recovering a connection with the first network device; entering an idle state; or initiating a cell reselection.

Optionally, in response to the path switching including switching to an indirect link, determining that the switching configuration information includes at least one of: an identifier of the target relay terminal device; an identifier of at least one target cell; an identifier of at least one target network device; or an identifier of the first terminal device.

Optionally, the switching configuration information is included in an RRC message.

Optionally, the identifier of the at least one target cell and/or the identifier of the at least one target network device are included in at least one of:
RRC reconfiguration information; SL path switching configuration information; RRC synchronization reconfiguration information; cell group configuration information; or spCell configuration information.

An embodiment of a fourth aspect of the disclosure provides a switching apparatus, applied to a first network device. The apparatus includes:
a transceiver unit, configured to send switching configuration information to a first terminal device.

The switching configuration information is used to execute path switching based on a target relay terminal device.

Optionally, the switching configuration information includes at least one of:
an identifier of the target relay terminal device; an identifier of at least one target cell; an identifier of at least one target network device; or an identifier of the first terminal device.

Optionally, the switching configuration information is used by the first terminal device to establish a connection with the target relay terminal device.

Optionally, the switching apparatus further includes:
a processing unit configured to, in response to the first terminal device being going to execute the path switching, or in response to the first terminal device being going to execute the switching to an indirect link, determine that the switching configuration information includes at least one of: an identifier of the target relay terminal device; an identifier of at least one target cell; an identifier of at least one target network device; or an identifier of the first terminal device.

Optionally, the switching apparatus further includes:
a processing unit, configured to, in response to the first terminal device not executing the path switching based on the target relay terminal device, determine that the switching configuration information does not include any of:
the identifier of the target relay terminal device; the identifier of at least one target cell; the identifier of at least one target network device; or the identifier of the first terminal device.

Optionally, the switching configuration information is included in an RRC message.

Optionally, the identifier of the at least one target cell and/or the identifier of the at least one target network device are included in at least one of:
RRC reconfiguration information; SL path switching configuration information; RRC synchronization reconfiguration information; cell group configuration information; or spCell configuration information.

An embodiment of a fifth aspect of the disclosure provides a communication device, including a processor and a memory. The memory is configured to store a computer program, and the processor is configured to execute the computer program in the memory to cause the device to execute the above-mentioned switching method in the first aspect.

An embodiment of a sixth aspect of the disclosure provides a communication device, including a processor and a memory. The memory is configured to store a computer program, and the processor is configured to execute the computer program in the memory to cause the device to execute the above-mentioned switching method in the second aspect.

An embodiment of a seventh aspect of the disclosure provides a communication device, including a processor and an interface circuit. The interface circuit is configured to receive code instructions and transmit the code instructions to the processor, and the processor is configured to run the code instructions to cause the device to execute the above-mentioned switching method in the first aspect.

An embodiment of an eighth aspect of the disclosure provides a communication device, including a processor and an interface circuit. The interface circuit is configured to receive code instructions and transmit the code instructions to the processor, and the processor is configured to run the code instructions to cause the device to execute the above-mentioned switching method in the second aspect.

An embodiment of a ninth aspect of the disclosure provides a computer-readable storage medium storing instructions. When the instructions are executed, the above-mentioned switching method in the first aspect is implemented.

An embodiment of a tenth aspect of the disclosure provides a computer-readable storage medium storing instructions. When the instructions are executed, the above-mentioned switching method in the second aspect is implemented.

An embodiment of an eleventh aspect of the disclosure provides a computer program. The computer program is executed by a computer to implement the above-mentioned switching method in the first aspect.

An embodiment of a twelfth aspect of the disclosure provides a computer program. The computer program is executed by a computer to implement the above-mentioned switching method in the second aspect.

With the switching method and the switching apparatus provided in the embodiments of the disclosure, the switching configuration information sent by the first network device is received, and the path switching is executed according to the switching configuration information and based on the target relay terminal device, so that a remote terminal device can obtain the serving cell of the target relay terminal device in a case that the remote terminal device establishes the connection with the target relay terminal device, and then executes the path switching. As a result, it is able to effectively improve a path switching success rate, reduce a communication delay, and improve the system communication efficiency.

The additional aspects and advantages of the disclosure will be partially given or become apparent in the following description, or may be understood through the implementation of the disclosure.

### BRIEF DESCRIPTION OF THE DRAWINGS

In order to illustrate the technical solutions of the embodiments of the disclosure or the background in a clearer manner, the drawings desired for the embodiments of the disclosure or the background will be described hereinafter briefly.
FIG. 1 is a schematic diagram of a communication system according to an embodiment of the disclosure;
FIG. 2 is a flowchart of a switching method according to an embodiment of the disclosure;
FIG. 3 is a flowchart of a switching method according to an embodiment of the disclosure;
FIG. 4 is a flowchart of a switching method according to an embodiment of the disclosure;
FIG. 5 is a flowchart of a switching method according to an embodiment of the disclosure;
FIG. 6 is a flowchart of a switching method according to an embodiment of the disclosure;
FIG. 7a is a flowchart of a switching method according to an embodiment of the disclosure;
FIG. 7b is a schematic diagram of an application scenario of the switching method according to an embodiment of the disclosure;
FIG. 8 is a structural schematic diagram of a switching apparatus according to an embodiment of the disclosure;
FIG. 9 is a structural schematic diagram of a switching apparatus according to an embodiment of the disclosure;
FIG. 10 is another structural schematic diagram of the switching apparatus according to an embodiment of the disclosure; and
FIG. 11 is a structural schematic diagram of a chip according to an embodiment of the disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. They are only examples of apparatuses and methods consistent with some aspects of the disclosure as recited in the appended claims.

Terms used in the embodiments of the disclosure are only for the purpose of describing specific embodiments, and shall not be construed to limit the disclosure. As used in the embodiments of the disclosure and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the disclosure. As used herein, the term "if" may be construed to mean "when" or "upon" or "in response to determining" depending on the context.

The embodiments of the disclosure will be described hereinafter in details, and examples are shown in the drawings. Identical or similar reference numbers represent an identical or similar element. The following embodiments described with reference to the drawings are for illustrative purposes only, but shall not be used to limit the scope of the disclosure.

It should be appreciated that, the method provided in any embodiment of the disclosure may be performed individually, any implementation mode in the embodiments may be performed individually or performed in combination with the other embodiments or the possible implementation mode in the other embodiments, or performed in combination with any technical solution in the art.

In order to understand a switching method disclosed in the embodiments of the disclosure, an applicable communication system in the embodiments of the disclosure will be described hereinafter at first.

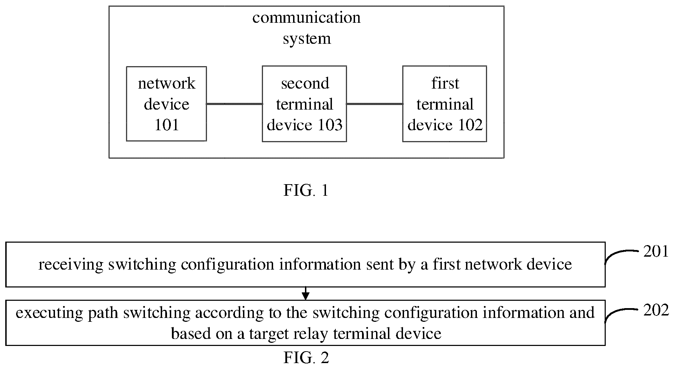

Referring to FIG. 1, which is a schematic diagram of a communication system according to an embodiment of the disclosure, the communication system includes, but not limited to, one first network device, one first terminal device and one second terminal device. Quantities and forms of the devices in FIG. 1 are for illustrative purposes only, but shall not be construed as limiting the embodiments of the disclosure. In actual use, the communication system may include two or more network devices, two or more first terminal devices, and two or more second terminal devices. For example, as shown in FIG. 1, the communication system includes one network device 101, one first terminal device 102, and one second terminal device 103.

It should be appreciated that, the technical solutions in the embodiments of the disclosure may be applied to various communication systems, e.g., a Long Term Evolution (LTE) system, a 5^{th}-Generation (5G) mobile communication system, a 5G New Radio (NR) system, or any novel mobile communication system that may occur in the future.

In the embodiments of the disclosure, the network device 101 is an entity at a network side for sending or receiving a signal. For example, the network device 101 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The network device in the embodiments of the disclosure may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the disclosure, the first terminal device 102 and the second terminal device 103 are each an entity at a user side for receiving or sending a signal, e.g., a mobile phone. The terminal device may also be called as terminal, User Equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the disclosure, a specific technology adopted by the terminal device and a specific device form thereof will not be particularly defined.

A relay technology refers to a technology where the first terminal device 102 is not connected directly to the network device 101 but communicates with the network device 101 via a relay of another terminal device (the second terminal device 103). The first terminal device 102 is called as a remote terminal device, and the second terminal device 103 providing a relay function is called as a relay terminal device. A direct connection of the terminal device with the network device is called as direct link, and a connection of the terminal device with the network device via the relay terminal device is called as indirect link.

In the related art, the remote terminal device is only supported to execute path switching between the direct link and the indirect link, and the network device communicating with the remote terminal device remains unchanged.

In an existing process, in a path switching procedure of the remote terminal device from the direct link to the indirect link, synchronization reconfiguration information includes a configuration for path switching. No matter whether there is a corresponding configuration of a target cell, because a gNB change is not involved, a remote UE is connected to a gNB via a relay UE. Hence, the remote UE only executes a procedure related to the path switching by default.

The remote terminal device may support the following patch switching scenarios.
A. Intra-gNB indirect-to-direct path switching, i.e., "remote UE <-> relay UE A <-> gNB X" to "remote UE <-> gNB X".
B. Intra-gNB direct-to-indirect path switching, i.e., "remote UE <-> gNB X" to "remote UE <-> relay UE A <-> gNB X".
C. Intra-gNB indirect-to-indirect path switching, i.e., "remote UE <-> relay UE A <-> gNB X" to "remote UE <-> relay UE B <-> gNB X".
D. Inter-gNB indirect-to-direct path switching, i.e., "remote UE <-> relay UE A <-> gNB X" to "remote UE <-> gNB Y".
E. Inter-gNB direct-to-indirect path switching, i.e., "remote UE <-> gNB X" to "remote UE <-> relay UE A <-> gNB Y".
F. Inter-gNB indirect-to-indirect path switching, i.e., "remote UE <-> relay UE A <-> gNB X" to "remote UE <-> relay UE B <-> gNB Y".

In the above path switching scenarios, the network device to which the remote terminal device is connected may change.

In the related art, a change in the network device is not involved in the path switching procedure of the remote terminal device, so the remote terminal device does not know the target cell before it accesses the relay terminal device.

In a R18 switching scenario, inter-gNB path switching may be involved, i.e., in a case that the remote terminal device is switched to the relay terminal device, a cell to which the relay terminal device is connected may change, and the cell after the change may not the target cell where resources are reserved for the remote terminal device. In this case, a failure may occur for a connection of the remote terminal device.

It should be appreciated that, the communication system described herein is used to describe the technical solutions in the embodiments of the disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

A switching method and a switching apparatus provided in the embodiments of the disclosure will be described hereinafter in more details in conjunction with the drawings.

FIG. 2 is a flowchart of a switching method according to an embodiment of the disclosure. It should be appreciated that, the switching method in this embodiment of the disclosure is executed by a first terminal device. This method is executed separately, or executed in combination with any one of the other embodiments of the disclosure. As shown in FIG. 2, the switching method includes, but not limited to, the following steps.

Step 201: switching configuration information sent by a first network device is received.

In an embodiment of the disclosure, the first terminal device receives the switching configuration information sent by the first network device.

The first network device is a source network device (source node), and the first terminal device executes path switching according to the received switching configuration information sent by the source network device.

It should be appreciated that, in the embodiments of the disclosure, the first terminal device is a remote terminal device or a potential remote terminal device.

In an embodiment of the disclosure, the first terminal device is directly or indirectly connected to the first network device (the source network device), i.e., the first terminal device is directly connected to the source network device, or connected to the source network device via one first relay terminal device. The first terminal device directly receives the switching configuration information sent by the first network device, or receives the switching configuration information sent by the first network device via one first relay terminal device.

In some implementations, the switching configuration information includes at least one of:

an identifier of a target relay terminal device; an identifier of at least one target cell; an identifier of at least one target network device; or an identifier of the first terminal device.

In some implementations, in response to the path switching of the first terminal device including switching to an indirect link, the switching configuration information includes at least one of the above information.

Optionally, the at least one target cell corresponds to the target relay terminal device, and the at least one target cell may be a serving cell available for the target relay terminal device, i.e., the at least one target cell is at least one cell which the first terminal device can access via the target relay terminal device.

Similarly, optionally, the at least one target network device (target node) corresponds to the target relay terminal device, and the at least one target network device may be a serving network device available for the target relay terminal device, i.e., the at least one target network device is at least one network device which the first terminal device can access via the target relay terminal device.

Optionally, the target relay terminal device may be a UE to Network (U2N) relay terminal device, or a UE to UE (U2U) relay terminal device.

It should be appreciated that, in the embodiments of the disclosure, the at least one target network device may include the first network device.

In some implementations, the first terminal device may receive the switching configuration information through receiving an RRC message. In other words, the switching configuration information is included in the RRC message.

Optionally, the RRC message may be RRC reconfiguration message.

In some implementations, the identifier of the at least one target cell and/or the identifier of the at least one target network device in the switching configuration information are included in at least one of:

RRC reconfiguration information; SL path switching configuration information; RRC synchronization reconfiguration information; cell group configuration information; or spCell configuration information.

The spCell includes a Primary Cell (PCell) and a Primary Secondary Cell (PSCell).

Step 202: path switching is executed according to the switching configuration information and based on the target relay terminal device.

In an embodiment of the disclosure, upon the receipt of the switching configuration information, the first terminal device executes the path switching based on the target relay terminal device.

In some implementations, upon the reception of the switching configuration information, the first terminal device establishes a connection with the target relay terminal device according to the switching configuration information.

In an embodiment of the disclosure, the connection between the first terminal device and the target relay terminal device is established via a PCS (a bottom-layer direct connection cellular communication protocol interface).

Optionally, in a case that the connection is established, the identifier of the first terminal device in the switching configuration information serves as a Cell-Radio Network Temporary Identifier (C-RNTI).

In some implementations, the first terminal device further obtains a current serving cell and/or a current serving network device of the target relay terminal device.

In other words, as a possible implementation, the first terminal device obtains the current serving cell of the target relay terminal device.

As another possible implementation, the first terminal device obtains the current serving network device of the target relay terminal device.

As yet another possible implementation, the first terminal device obtains the current serving cell and the current serving network device of the target relay terminal device.

It should be appreciated that, in the embodiments of the disclosure, the first terminal device may not establish the connection with the target relay terminal device, and it directly obtains the current serving cell and/or the current serving network device of the target relay terminal device. Alternatively, the first terminal device may establish the connection with the target relay terminal device, and obtain the current serving cell and/or the current serving network device of the target relay terminal device.

In some implementations, after the first terminal device has obtained the current serving cell and/or serving network device of the target relay terminal device, the first terminal device determines whether or not the current serving cell and/or serving network device of the target relay terminal device is a target cell and/or a target network device configured by a source network device based on the target cell and/or target network device in the switching configuration information.

In response to the at least one target cell including the current serving cell and/or the at least one target network device including the current serving network device, the first terminal device establishes the connection with the current serving network device of the target relay terminal device via the target relay terminal device.

In response to the at least one target cell not including the current serving cell and/or the at least one target network device not including the current serving network device, the first terminal device executes at least one of following behaviors:
initiating an RRC connection reestablishment; disconnecting the connection with the target relay terminal device; recovering a connection with the first network device; entering an idle state; or initiating a cell reselection.

Optionally, a cause for initiating, by the first terminal device, the RRC connection reestablishment may be a path switching failure.

It should be appreciated that, the current serving cell of the target relay terminal device corresponds to the current serving network device, and the target cell in the switching configuration information also corresponds to the target network device. If the at least one target cell in the switching configuration information includes the current serving cell, the at least one target network device also includes the current serving network device in a case that the switching configuration information further includes the at least one target network device. Similarly, if the at least one target network device in the switching configuration information includes the current serving network device, the at least one target cell also includes the target serving cell in a case that the switching configuration information further includes the at least one target cell. In other words, in a case that the switching configuration information includes at least one target cell and at least one target network device, there is no such a circumstance where the at least one target cell includes the current serving cell but the at least one target network device does not include the current serving network device, nor such a circumstance where the at least one target network device includes the current serving network device but the at least one target cell does not include the current serving cell.

In the embodiments of the disclosure, after obtaining the current serving cell and/or serving network device of the target relay terminal device, the first terminal device determines whether or not the current serving cell and/or serving network device of the target relay terminal device are configured by the source network device. If yes, the first terminal device establishes the connection with the current serving network device of the target relay terminal device via the target relay terminal device, and accesses the current serving cell of the target relay terminal device. If not, the first terminal device directly initiates the RRC connection reestablishment, or enters the idle state, or falls back to a connection before the path switching (i.e., recovers the connection with the first network device, and this connection may be a direct connection or an indirect connection), or enters the idle state and performs cell reselection.

In a word, the switching configuration information sent by the first network device is received, and the path switching is executed according to the switching configuration information and based on the target relay terminal device, so that the remote terminal device obtains the serving cell of the target relay terminal device in a case that it establishes the connection with the target relay terminal device, and then executes the path switching. In this way, it is able to effectively improve a path switching success rate, reduce a communication delay, and improve the system communication efficiency.

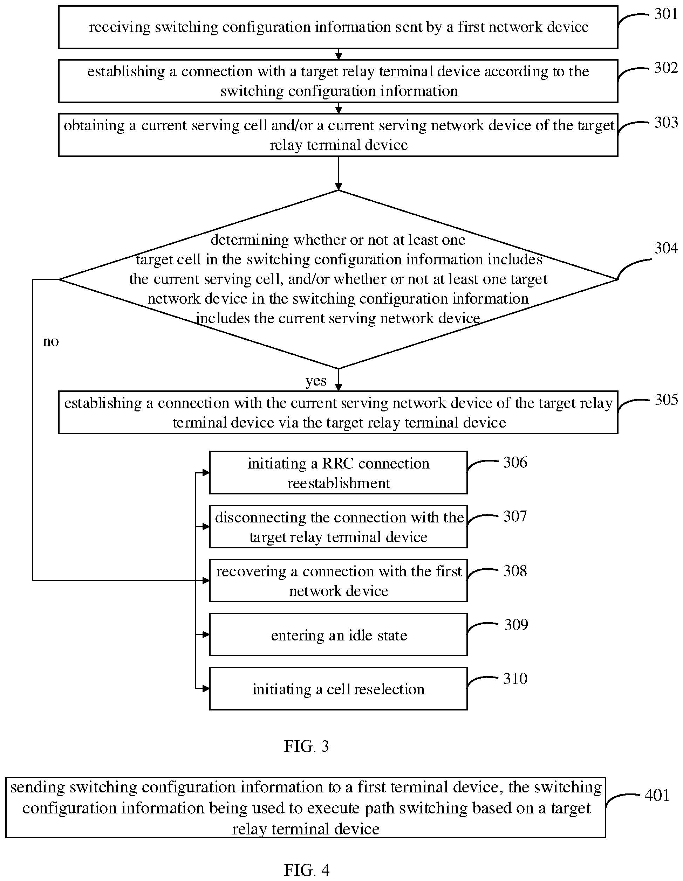

FIG. 3 is a flowchart of a switching method according to an embodiment of the disclosure. It should be appreciated that, the switching method in this embodiment of the disclosure is executed by a first terminal device. This method is executed separately, or executed in combination with any one of the other embodiments of the disclosure. As shown in FIG. 3, the switching method includes, but not limited to, the following steps.

Step 301: switching configuration information sent by a first network device is received.

In an embodiment of the disclosure, the first terminal device receives the switching configuration information sent by the first network device.

The switching configuration information includes at least one of:
an identifier of a target relay terminal device; an identifier of at least one target cell; an identifier of at least one target network device; or an identifier of the first terminal device.

The first network device is a source network device, and the first terminal device executes path switching according to the received switching configuration information sent by the source network device.

In an embodiment of the disclosure, the first terminal device is directly or indirectly connected to the first network device (the source network device), i.e., the first terminal device is directly connected to the source network device, or connected to the source network device via one first relay terminal device. The first terminal device directly receives the switching configuration information sent by the first network device, or receives the switching configuration information sent by the first network device via one first relay terminal device.

In some implementations, in response to the path switching of the first terminal device including switching to an indirect link, the switching configuration information includes at least one of the above information.

Optionally, the at least one target cell corresponds to the target relay terminal device, and the at least one target cell may be a serving cell available for the target relay terminal device, i.e., the at least one target cell is at least one cell which the first terminal device can access via the target relay terminal device.

Similarly, optionally, the at least one target network device (node) corresponds to the target relay terminal device, and the at least one target network device may be a serving network device available for the target relay terminal device, i.e., the at least one target network device is at least one network device which the first terminal device can access via the target relay terminal device.

It should be appreciated that, in the embodiments of the disclosure, the at least one target network device may include the first network device.

In some implementations, the first terminal device may receive the switching configuration information through receiving an RRC message. In other words, the switching configuration information is included in the RRC message.

Optionally, the RRC message may be RRC reconfiguration message.

In some implementations, the identifier of the at least one target cell and/or the identifier of the at least one target network device in the switching configuration information are included in at least one of:

RRC reconfiguration information; SL path switching configuration information; RRC synchronization reconfiguration information; cell group configuration information; or spCell configuration information.

Step 302: a connection with the target relay terminal device is established according to the switching configuration information.

In an embodiment of the disclosure, upon the receipt of the switching configuration information, the first terminal device establishes the connection with the target relay terminal device according to the switching configuration information.

In an embodiment of the disclosure, the connection between the first terminal device and the target relay terminal device is established via a PCS interface.

Optionally, in a case that the connection is established, the identifier of the first terminal device in the switching configuration information serves as a C-RNTI.

In some possible implementations, the switching method further includes the following steps.

Step 303: a current serving cell and/or a current serving network device of the target relay terminal device are obtained.

In other words, as a possible implementation, the first terminal device obtains the current serving cell of the target relay terminal device.

As another possible implementation, the first terminal device obtains the current serving network device of the target relay terminal device.

As yet another possible implementation, the first terminal device obtains the current serving cell and the current serving network device of the target relay terminal device.

It should be appreciated that, in the embodiments of the disclosure, the first terminal device may not establish the connection with the target relay terminal device, and it directly obtains the current serving cell and/or the current serving network device of the target relay terminal device. Alternatively, the first terminal device may establish the connection with the target relay terminal device, and obtain the current serving cell and/or the current serving network device of the target relay terminal device.

Step 304: whether or not the at least one target cell in the switching configuration information includes the current serving cell and/or whether or not the at least one target network device in the switching configuration information includes the current serving network device are determined.

In a case that the at least one target cell includes the current serving cell and/or the at least one target network device includes the current serving network device, Step 305 is executed; and in a case that the at least one target cell does not include the current serving cell and/or the at least one target network device does not include the current serving network device, at least one of Steps 306 to 310 is executed.

It should be appreciated that, the current serving cell of the target relay terminal device corresponds to the current serving network device, and the target cell in the switching configuration information also corresponds to the target network device. If the at least one target cell in the switching configuration information includes the current serving cell, the at least one target network device also includes the current serving network device in a case that the switching configuration information further includes the at least one target network device. Similarly, if the at least one target network device in the switching configuration information includes the current serving network device, the at least one target cell also includes the target serving cell in a case that the switching configuration information further includes the at least one target cell. In other words, in a case that the switching configuration information includes at least one target cell and at least one target network device, there is no such a circumstance where the at least one target cell includes the current serving cell but the at least one target network device does not include the current serving network device, nor such a circumstance where the at least one target network device includes the current serving network device but the at least one target cell does not include the current serving cell.

In other words, as a possible implementation, in a case that the first terminal device determines that the at least one target cell includes the current serving cell, Step 305 is executed; and in a case that the first terminal device determines that the at least one target cell does not include the current serving cell, at least one of Steps 306 to 310 is executed.

As another possible implementation, in a case that the first terminal device determines that the at least one target network device includes the current serving network device, Step 305 is executed; and in a case that the first terminal device determines that the at least one target network device does not include the current serving network device, at least one of Steps 306 to 310 is executed.

As yet another possible implementation, in a case that the first terminal device determines that the at least one target cell includes the current serving cell and the at least one target network device includes the current serving network device, Step 305 is executed; and in a case that the first terminal device determines that the at least one target cell does not include the current serving cell and the at least one target network device does not include the current serving network device, at least one of Steps 306 to 310 is executed.

Step 305: a connection with the current serving network device of the target relay terminal device is established via the target relay terminal device.

In an embodiment of the disclosure, in a case that the first terminal device determines that the current serving cell and/or the current serving network device of the target relay terminal device are configured by the source network device, the first terminal device establishes the connection with the current serving network device of the target relay terminal device via the target relay terminal device, and accesses the current serving cell of the target relay terminal device.

Step 306: an RRC connection reestablishment is initiated.

In an embodiment of the disclosure, in a case that the first terminal device determines that the current serving cell and/or serving network device of the target relay terminal device are not configured by the source network device, the first terminal device directly indicates the RRC connection reestablishment.

Optionally, a cause for initiating, by the first terminal device, the RRC connection reestablishment may be a path switching failure.

Step 307: a connection with the target relay terminal device is disconnected.

In an embodiment of the disclosure, in a case that the first terminal device determines that the current serving cell and/or serving network device of the target relay terminal device are not configured by the source network device, the first terminal device may further disconnect the connection with the target relay terminal device.

Step 308: a connection with the first network device is recovered.

In an embodiment of the disclosure, in a case that the first terminal device determines that the current serving cell and/or current serving network device of the target relay terminal device are not configured by the source network device, the first terminal device may further recover the connection with the first network device, i.e., fall back to the connection before the path switching.

Step 309: an idle state is entered.

In an embodiment of the disclosure, in a case that the first terminal device determines that the current serving cell and/or current serving network device of the target relay terminal device are not configured by the source network device, the first terminal device may further directly enter the idle state.

Step 310: a cell reselection is initiated.

In an embodiment of the disclosure, the first terminal device determines that the current serving cell and/or current serving network device of the target relay terminal device are not configured by the source network device, the first terminal device may further initiate the cell reselection.

It should be appreciated that, Steps 303 to 310 may be executed subsequent to, and independent of, Steps 301 and 302. For example, in response to the first terminal device establishing the connection with the target relay terminal device, the first terminal device may execute some of Steps 303 to 310.

In a word, the first terminal device receives the switching configuration information sent by the first network device, establishes the connection with the target relay terminal device according to the switching configuration information, obtains the current serving cell and/or the current serving network device of the target relay terminal device, and determines whether or not the at least one target cell in the switching configuration information includes the current serving cell and/or whether or not the at least one target network device in the switching configuration information includes the current serving network device. If yes, the first terminal device establishes the connection with the current serving network device of the target relay terminal device via the target relay terminal device, and if not, the first terminal device initiates the RRC connection reestablishment, or enters the idle state, or falls back to the connection before the path switching, or enters the idle state and performs the cell reselection, so that the remote terminal device can obtain the serving cell of the target relay terminal device in a case that it establishes the connection with the target relay terminal device, detects whether or not the serving cell of the accessed relay terminal device is a target cell configured for the path switching, and then executes the path switching. If not, the remote terminal device directly initiates the reestablishment without any switching. In this way, it is able to effectively improve a path switching success rate, reduce a communication delay, and improve the system communication efficiency.

FIG. 4 is a flowchart of a switching method according to an embodiment of the disclosure. It should be appreciated that, the switching method in this embodiment of the disclosure is executed by a first network device. This method is executed separately, or executed in combination with any one of the other embodiments of the disclosure. As shown in FIG. 4, the switching method includes, but not limited to, the following steps.

Step 401: switching configuration information is sent to a first terminal device, and the switching configuration information is used to execute path switching based on a target relay terminal device.

In an embodiment of the disclosure, the first network device sends the switching configuration information to the first terminal device.

The first network device is a source network device (source node), and the first terminal device executes path switching according to the received switching configuration information sent by the source network device.

In an embodiment of the disclosure, the first terminal device is directly or indirectly connected to the first network device (the source network device), i.e., the first terminal device is directly connected to the source network device, or connected to the source network device via one relay terminal device. The first network device directly sends the switching configuration information to the first terminal device, or sends the switching configuration information to the first terminal device via one relay terminal device.

In some implementations, the switching configuration information includes at least one of:
an identifier of the target relay terminal device; an identifier of at least one target cell; an identifier of at least one target network device; or an identifier of the first terminal device.

In some implementations, in response to the first terminal device being going to execute path switching or in response to the first terminal device being going to execute switching to an indirect link, the switching configuration information is determined to include at least one of the above information.

In some implementations, in a case that the first terminal device does not execute the path switching based on the target relay terminal device, the switching configuration information is determined to not include any of the above information. In other words, in a case that the first terminal device does not execute the path switching based on the target relay terminal device, the above fields are not included in the switching configuration information.

Optionally, the at least one target cell corresponds to the target relay terminal device, and the at least one target cell is a serving cell available for the target relay terminal device, i.e., the at least one target cell is at least one cell which the first terminal device can access via the target relay terminal device.

Similarly, optionally, the at least one target network device (target node) corresponds to the target relay terminal device, and the at least one target network device is a serving network device available for the target relay terminal device, i.e., the at least one target network device is at least one network device which the first terminal device can access via the target relay terminal device.

Optionally, the target relay terminal device may be a U2N relay terminal device, or a U2U relay terminal device.

In some implementations, the first network device sends the switching configuration information through sending an RRC message to the first terminal device. In other words, the switching configuration information is included in the RRC message.

Optionally, the RRC message may be RRC reconfiguration message.

In some implementations, the identifier of the at least one target cell and/or the identifier of the at least one target network device in the switching configuration information may be included in any one of:

RRC reconfiguration information; SL path switching configuration information; RRC synchronization reconfiguration information; cell group configuration information; or spCell configuration information.

In some implementations, prior to sending the switching configuration information to the first terminal device, the first network device sends request information to a target cell and/or target network device configured in the switching configuration information, so as to request the target cell and/or target network device to accept the switching of the remote terminal device, and prepare for the switching of the remote terminal device.

It should be appreciated that, upon the receipt of a response message sent by the target cell and/or target network device and indicating that the request is accepted, the first network device adds the target cell and/or target network device into the switching configuration information. In a case that the request is rejected by the target cell and/or target network device, the first network device deletes the target cell and/or target network device which have rejected the request from the switching configuration information.

In an embodiment of the present application, the switching configuration information is used to execute the path switching based on the target relay terminal device. Upon the receipt of the switching configuration information, the first terminal device executes the path switching based on the target relay terminal device.

In some implementations, the switching configuration information is used by the first terminal device to establish the connection with the target relay terminal device. Upon the receipt of the switching configuration information, the first terminal device establishes the connection with the target relay terminal device according to the switching configuration information.

Optionally, the connection between the first terminal device and the target relay terminal device may be established based on a PCS interface.

In a word, the switching configuration information is sent to the first terminal device, and the switching configuration information is used to execute the path switching based on the target relay terminal device, so that the remote terminal device can obtain a serving cell of the target relay terminal device in a case that it establishes the connection with the target relay terminal device, and then executes the path switching. In this way, it is able to effectively increase a path switching success rate, reduce a communication delay, and improve the system communication efficiency.

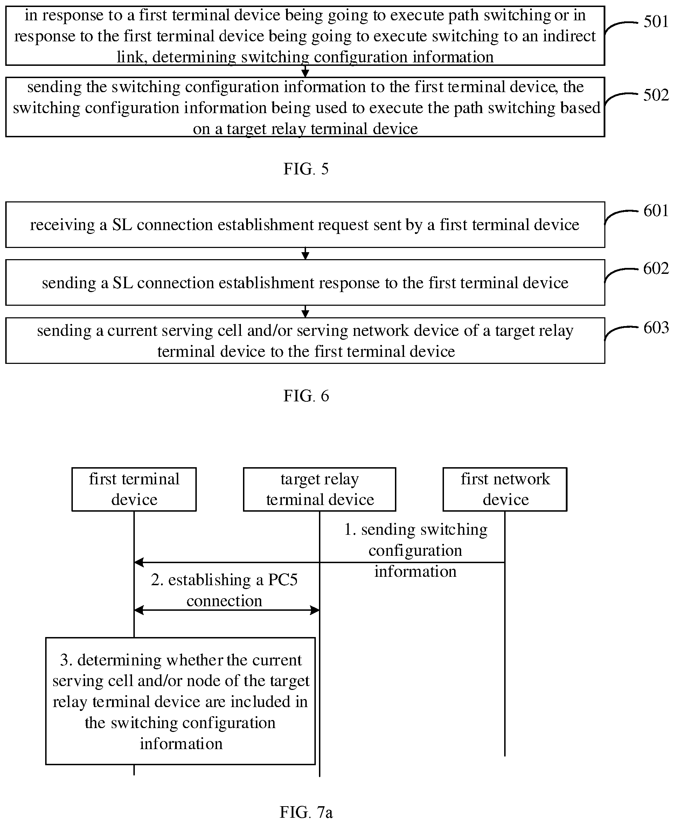

FIG. 5 is a flowchart of a switching method according to an embodiment of the disclosure. It should be appreciated that, the switching method in this embodiment of the disclosure is executed by a first network device. This method is executed separately, or executed in combination with any one of the other embodiments of the disclosure. As shown in FIG. 5, the switching method includes, but not limited to, the following steps.

Step 501: in response to a first terminal device being going to execute path switching or in response to the first terminal device being going to execute switching to an indirect link, switching configuration information is determined.

In an embodiment of the disclosure, as a possible implementation, in response to the first terminal device being going to execute the path switching, the switching configuration information is determined to include at least one of following information (fields):
an identifier of a target relay terminal device; an identifier of at least one target cell; an identifier of at least one target network device; or an identifier of the first terminal device.

As another possible implementation, in response to the first terminal device being going to execute switching to an indirect link, the switching configuration information is determined to include at least one of following information (fields):
an identifier of a target relay terminal device; an identifier of at least one target cell; an identifier of at least one target network device; or an identifier of the first terminal device.

In other words, in an embodiment of the disclosure, the fields associated with the path switching are present conditionally, i.e., the above fields are configured in the switching configuration information only in a case that the first network device (a source network device) determines that the first terminal device is going to execute the path switching, or execute switching to an indirect link.

The first terminal device being going to execute switching to the indirect link may include at least one of:
a circumstance where the first terminal device connected to a direct link is switched to be connected to a relay terminal device, and a connected network device remains unchanged;
a circumstance where the first terminal device connected to the direct link is switched to be connected to a relay terminal device, and a connected network device changes;
a circumstance where the first terminal device connected to a relay terminal device A is switched to be connected to a relay terminal device B, and a connected network device remains unchanged; or
a circumstance where the first terminal device connected to the relay terminal device A is switched to be connected to the relay terminal device B, and a connected network device changes.

In some implementations, in response to the first terminal device being going to execute the path switching based on the target relay terminal device, an attribute of the at least one field is optional or mandatory.

In some implementations, in response to the first terminal device not executing the path switching based on the target relay terminal device, the at least one field is absent, i.e., the switching configuration information does not include any of:
the identifier of the target relay terminal device; the identifier of the at least one target cell; the identifier of the at least one target network device; or the identifier of the first terminal device.

Optionally, the at least one target cell corresponds to the target relay terminal device, and the at least one target cell is a serving cell available for the target relay terminal device, i.e., the at least one target cell is at least one cell which the first terminal device can access via the target relay terminal device.

Similarly, optionally, the at least one target network device (node) corresponds to the target relay terminal device, and the at least one target network device is a serving network device available for the target relay terminal device, i.e., the at least one target network device is at least one network device which the first terminal device can access via the target relay terminal device.

Step 502: the switching configuration information is sent to the first terminal device, and the switching configuration information is used to execute the path switching based on the target relay terminal device.

In an embodiment of the disclosure, the first network device sends the switching configuration information to the first terminal device.

In an embodiment of the disclosure, the first terminal device is directly or indirectly connected to the first network device (the source network device), i.e., the first terminal device is directly connected to the source network device, or connected to the source network device via one relay terminal device. The first network device directly sends the switching configuration information to the first terminal device, or sends the switching configuration information to the first terminal device via one relay terminal device.

In some implementations, the switching configuration information includes at least one of:
an identifier of the target relay terminal device; an identifier of at least one target cell; an identifier of at least one target network device; or an identifier of the first terminal device.

Optionally, the target relay terminal device may be a U2N relay terminal device, or a U2U relay terminal device.

In some implementations, the first network device sends the switching configuration information to the first terminal device through sending an RRC message, i.e., the switching configuration information is included in the RRC message.

Optionally, the RRC message may be RRC reconfiguration message.

In some implementations, the identifier of the at least one target cell and/or the identifier of the at least one target network device in the switching configuration information are included in at least one of:
RRC reconfiguration information; SL path switching configuration information; RRC synchronization reconfiguration information; cell group configuration information; or spCell configuration information.

In an embodiment of the disclosure, the switching configuration information is used to execute the path switching based on the target relay terminal device. Upon the receipt of the switching configuration information, the first terminal device executes the path switching based on the target relay terminal device.

In some implementations, the switching configuration information is used by the first terminal device to establish the connection with the target relay terminal device. Upon the receipt of the switching configuration information, the first terminal device establishes the connection with the target relay terminal device according to the switching configuration information.

Optionally, the connection between the first terminal device and the target relay terminal device may be established based on a PCS interface.

In a word, in response to the first terminal device being going to execute the path switching or in response to the first terminal device being going to execute the switching to the indirect link, the switching configuration information is determined, the switching configuration information is sent to the first terminal device, and the switching configuration information is used to execute the path switching based on the target relay terminal device, so that the remote terminal device obtains the serving cell of the target relay terminal device in a case that it establishes the connection with the target relay terminal device, and then executes the path switching. In this way, it is able to effectively increase a path switching success rate, reduce a communication relay, and improve the system communication efficiency.

FIG. 6 is a flowchart of a switching method according to an embodiment of the disclosure. It should be appreciated that, the switching method in this embodiment of the disclosure is executed by a target relay terminal device. This method is executed separately, or executed in combination with any one of the other embodiments of the disclosure. As shown in FIG. 6, the switching method includes, but not limited to, one or more of the following steps. Step 601: a SL connection establishment request sent by a first terminal device is received.

In an embodiment of the disclosure, the target relay terminal device receives the SL connection establishment request sent by the first terminal device, so as to establish a sidelink connection with the first terminal device.

Optionally, the connection establishment request includes an identifier of the first terminal device.

Upon the receipt of the connection establishment request sent by the first terminal device, the target relay terminal device establishes the connection with the first terminal device according to the identifier of the first terminal device included therein.

Step 602: a SL connection establishment response is sent to the first terminal device.

In an embodiment of the disclosure, upon the receipt of the connection establishment request sent by the first terminal device, the target relay terminal device accepts the request, establishes the sidelink connection with the first terminal device, and sends a response message for the connection establishment request to the first terminal device.

Optionally, the connection between the first terminal device and the target relay terminal device may be established based on a PCS interface.

Step 603: a current serving cell and/or a serving network device of the target relay terminal device are sent to the first terminal device.

In an embodiment of the disclosure, after the target relay terminal device has established the connection with the first terminal device, the target relay terminal device interacts with the first terminal device, and the first terminal device obtains the current serving cell and/or the serving network device of the target relay terminal device.

It should be appreciated that, in this embodiment of the disclosure, in a case that the current serving cell and/or serving network device are sent to the first terminal device, an identifier of the serving cell and/or an identifier of the serving network device are directly sent to the first terminal device, or the serving cell and/or the serving network device are sent to the first terminal device through other signaling interaction rather than directly sending information about the serving cell and/or serving network device, which will not be particularly defined herein.

In some implementations, in a case that the first terminal device determines that the current serving cell and/or the serving network device of the target relay terminal device are not included in the switching configuration information, the first terminal device disconnects the connection with the target relay terminal device.

In a word, the connection establishment message sent by the first terminal device is received, the SL connection establishment response is sent to the first terminal device, and the current serving cell and/or the serving network device of the target relay terminal are sent to the first terminal device, so that the remote terminal device can obtain the serving cell of the target relay terminal device in a cast that it establishes the connection with the target relay terminal device, and then executes the path switching. In this way, it is able to effectively increase a path switching success rate, reduce a communication delay, and improve the system communication efficiency.

FIG. 7a is a flowchart of a switching method according to an embodiment of the disclosure. This method is executed separately, or executed in combination with any one of the other embodiments of the disclosure. As shown in FIG. 7a, the switching method includes, but not limited to, the following steps.

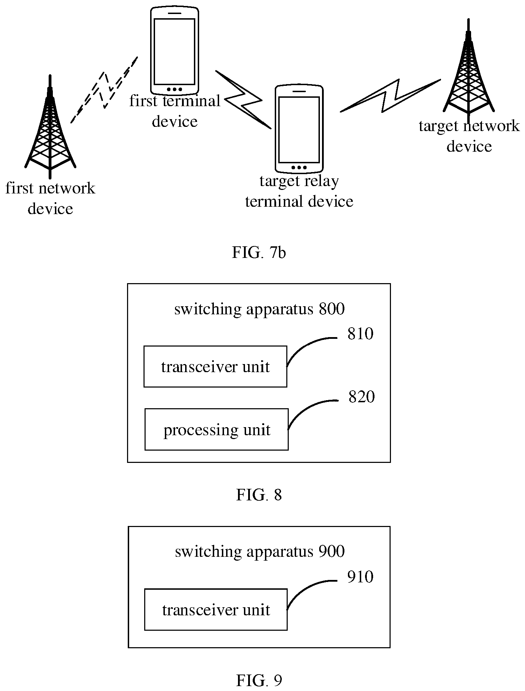

Any step in this embodiment may be executed separately, or executed in combination with the other steps. An order of these steps will not be particularly defined herein, and any combination and execution mode may fall within the protection scope of the disclosure. FIG. 7b shows an application scenario of the switching method in the embodiments of the disclosure.
1. A first network device (source node) sends switching configuration information to a first terminal device, and the switching configuration information includes at least one of: an identifier of a target relay terminal device; an identifier of at least one target cell; an identifier of at least one target network device (target node); or an identifier of the first terminal device.

It should be appreciated that, the first network device is directly, or indirectly (via a relay), connected to the first terminal device.

It should be appreciated that, in an embodiment of the disclosure, the at least one target network device includes the first network device.

As a possible implementation, the at least one target cell corresponds to the target relay terminal device, and the at least one target cell is a serving cell available for the target relay terminal device, i.e., the at least one target cell is at least one cell which the first terminal device can access via the target relay terminal device.

Similarly, as a possible implementation, the at least one target network device corresponds to the target relay terminal device, and the at least one target network device is a serving network device available for the target relay terminal device, i.e., the at least one target network device is at least one network device which the first terminal device can access via the target relay terminal device.

As a possible implementation, the target relay terminal device may be a U2N relay terminal device, or a U2U relay terminal device.

As a possible implementation, the network device (node) may be a gNB.

As a possible implementation, the first network device sends the switching configuration information through sending an RRC message to the first terminal device. In other words, the switching configuration information is included in the RRC message.

Optionally, the RRC message may be RRC reconfiguration message.

As a possible implementation, the identifier of the at least one target cell and/or the identifier of the at least one target network device in the switching configuration information are included in at least one of:

RRC reconfiguration information; SL path switching configuration information; RRC synchronization reconfiguration information; cell group configuration information; or spCell configuration information.

As a possible implementation, the above at least one information (a field associated with the path switching) included in the switching configuration information is present conditionally, i.e., the above field is configured in the switching configuration information only in a case that the first network device (source network device) determines that the first terminal device is going to execute path switching or execute switching to an indirect link.

The first terminal device being going to execute switching to the indirect link may include at least one of:
a circumstance where the first terminal device connected to a direct link is switched to be connected to a relay terminal device, and a connected network device gNB remains unchanged;
a circumstance where the first terminal device connected to the direct link is switched to be connected to a relay terminal device, and a connected network device gNB changes;
a circumstance where the first terminal device connected to a relay terminal device A is switched to be connected to a relay terminal device B, and a connected network device gNB remains unchanged; or
a circumstance where the first terminal device connected to the relay terminal device A is switched to be connected to the relay terminal device B, and a connected network device gNB changes.

As a possible implementation, in response to the first terminal device being going to execute the path switching based on the target relay terminal device, an attribute of the at least one field is optional or mandatory.

As a possible implementation, in response to the first terminal device not executing the path switching based on the target relay terminal device, the above at least one field is absent, i.e., the switching configuration information does not include any one of:
the identifier of the target relay terminal device; the at least one target cell; the at least one target network device; or the identifier of the first terminal device.

2. Upon the receipt of the switching configuration information sent by the first network device, the first terminal device establishes the connection with the target relay terminal device according to the switching configuration information.

As a possible implementation, the connection is established based on a PC5 communication interface.

As a possible implementation, in a case that the connection is established, the identifier of the first terminal device in the switching configuration information may serve as a C-RNTI.

3. The first terminal device obtains a current serving cell and/or a current serving network device of the target relay terminal device, and determines whether or not the current serving cell and/or the current serving network device are included in a target cell and/or a target network device configured in the switching configuration information.

As a possible implementation, in a case that the current serving cell and/or the serving network device of the target relay terminal device are included in the switching configuration information, the first terminal device establishes the connection with the current serving network device via the target relay terminal device, and accesses the current serving cell of the target relay terminal device.

As a possible implementation, in a case that the current serving cell and/or the serving network device of the target relay terminal device are not included in the switching configuration information, the first terminal device directly initiates an RRC connection reestablishment, or enters an idle state, or falls back to a connection before the path switching, or enters the idle state and performs a cell reselection.

Optionally, a cause for the RRC connection reestablishment may be a path switching failure.

Corresponding to the switching methods provide in the above embodiments, the disclosure further provides a switching apparatus. The switching apparatus provided in the embodiments of the disclosure corresponds to the method provided in the above embodiments, so the implementation of the switching method is also adapted to the switching apparatus, which will not be particularly defined herein.

FIG. 8 is a structural schematic diagram of a switching apparatus according to an embodiment of the disclosure.

As shown in FIG. 8, the switching apparatus 800 includes a transceiver unit 810 and a processing unit 820.

The transceiver unit 810 is configured to receive switching configuration information sent by a first network device.

The processing unit 820 is configured to execute path switching according to the switching configuration information and based on a target relay terminal device.

Optionally, the switching configuration information includes at least one of:
an identifier of the target relay terminal device;
an identifier of at least one target cell;
an identifier of at least one target network device; or
an identifier of the first terminal device.

Optionally, the processing unit 820 is specifically configured to:
establish a connection with the target relay terminal device according to the switching configuration information.

Optionally, the transceiver unit 810 is further configured to:
obtain a current serving cell and/or a current serving network device of the target relay terminal device.

Optionally, in response to the at least one target cell including the current serving cell, and/or in response to the at least one target network device including the current serving network device, the processing unit 820 is further configured to:
establish a connection with the current serving network device of the target relay terminal device via the target relay terminal device.

Optionally, in response to the at least one target cell not including the current serving cell, and/or in response to the at least one target network device not including the current serving network device, the processing unit 820 is further configured to execute at least one of:
initiating an RRC connection reestablishment;
disconnecting the connection with the target relay terminal device;
recovering a connection with the first network device;
entering an idle state; or
initiating a cell reselection.

Optionally, in response to the path switching includes switching to an indirect link, the switching configuration information includes at least one of the above information.

Optionally, the switching configuration information is included in an RRC message.

Optionally, the identifier of the at least target cell and/or the identifier of the at least one target network device are included in at least one of:
RRC reconfiguration information; SL path switching configuration information; RRC synchronization reconfiguration information; cell group configuration information; or spCell configuration information.

The switching apparatus in this embodiment receives the switching configuration information sent by the first network device, and executes the path switching according to the switching configuration information and based on the target relay terminal device, so that the remote terminal device obtains the serving cell of the target relay terminal device in a case that it establishes the connection with the target relay terminal device, and then executes the path switching. In this way, it is able to effectively increase a path switching success rate, reduce a communication delay, and improve the system communication efficiency.

FIG. 9 is a structural schematic diagram of a switching apparatus according to an embodiment of the disclosure.

As shown in FIG. 9, the switching apparatus 900 includes a transceiver unit 910.

The transceiver unit 910 is configured to send switching configuration information to a first terminal device.

The switching configuration information is used to execute path switching based on a target relay terminal device.

Optionally, the switching configuration information includes at least one of:
an identifier of the target relay terminal device;
an identifier of at least one target cell;
an identifier of at least one target network device; or
an identifier of the first terminal device.

Optionally, the switching configuration information is used by the first terminal device to establish a connection with the target relay terminal device.

Optionally, the switching apparatus further includes:
a processing unit (not shown) configured to, in response to the first terminal device being going to execute the path switching, or in response to the first terminal device being going to execute the switching to an indirect link, determine that the switching configuration information includes at least one of the above information.

Optionally, the switching apparatus further includes:
a processing unit (not shown) configured to, in response to the first terminal device not executing the path switching based on the target relay terminal device, determine that the switching configuration information does not include any of:
the identifier of the target relay terminal device;
the identifier of at least one target cell;
the identifier of at least one target network device; or
the identifier of the first terminal device.

Optionally, the switching configuration information is included in an RRC message.

Optionally, the identifier of the at least one target cell and/or the identifier of the at least one target network device are included in at least one of:
RRC reconfiguration information; SL path switching configuration information; RRC synchronization reconfiguration information; cell group configuration information; or spCell configuration information.

The switching apparatus in this embodiment sends the switching configuration information to the first terminal device, and the switching configuration information is used to execute the path switching of the target relay terminal device, so that the remote terminal device obtains the serving cell of the target relay terminal device in a case that it establishes the connection with the target relay terminal device, and then executes the path switching. In this way, it is able to effectively increase a path switching success rate, reduce a communication delay, and improve the system communication efficiency.

In order to implement the above embodiments, embodiments of the disclosure also provide a communication device, including a processor and a memory. The memory is configured to store a computer program, and the processor is configured to execute the computer program in the memory to cause the device to execute the method in FIG. 2 and FIG. 3, or execute the method in FIG. 5.

In order to implement the above embodiments, embodiments of the disclosure also provide a communication device, including a processor and a memory. The memory is configured to store a computer program, and the processor is configured to execute the computer program in the memory to cause the device to execute the method in FIG. 4 and FIG. 5.

In order to implement the above embodiments, embodiments of the disclosure also provide a communication device, including a processor and an interface circuit. The interface circuit is configured to receive code instructions and transmit the code instructions to the processor, and the processor is configured to execute the code instructions to implement the method in FIG. 2 and FIG. 3.

In order to implement the above embodiments, embodiments of the disclosure also provide a communication device, including a processor and an interface circuit. The interface circuit is configured to receive code instructions and transmit the code instructions to the processor, and the processor is configured to execute the code instructions to implement the method in FIG. 4 and FIG. 5.

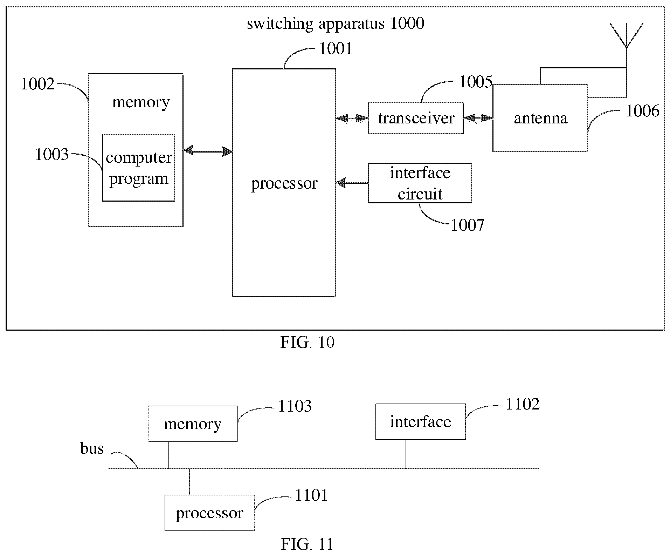

FIG. 10 is a structural schematic diagram of a switching apparatus according to an embodiment of the disclosure. The switching apparatus 1000 may be a network device, a terminal device, or a chip, a chip system or a processor which supports the network device to achieve the above-mentioned method, or a chip, a chip system or a processor which supports the terminal device to achieve the above-mentioned method. The apparatus is used to achieve the above-mentioned method, and it may refer to the description in the above method embodiments.

The switching apparatus 1000 may include one or more processors 1001. The processor 1001 may be a general-purpose processor or special-purpose processor, e.g., a baseband processor or a Central Processing Unit. The baseband processor is configured to process a communication protocol as well as communication data, and the Central Processing Unit is configured to control the switching apparatus (e.g., a base station, a baseband chip, a terminal device, a terminal device chip, a Distributed Unit (DU) or a Centralized Unit (CU)), execute a computer program, and process data in the computer program.

Optionally, the switching apparatus 1000 further includes one or more memories 1002 storing therein a computer program 1003. The computer program 1003 is executed by the processor 1001, so that the switching apparatus 1000 executes the method described in the above method embodiments. The computer program 1003 may be programmed in the processor 1001, and in this case, the processor 1001 may be implemented through hardware.

Optionally, the memory 1002 further stores therein data. The switching apparatus 1000 is arranged independent of, or integrated with, the memory 1002.

Optionally, the switching apparatus 1000 further includes a transceiver 1005 and an antenna 1006. The transceiver 1005 is also called as a transceiver unit, a transceiver machine or a transceiver circuit, and it is configured to achieve a transmission function and a reception function. The transceiver 1005 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the switching apparatus 1000 further includes one or more interface circuits 1007. The interface circuit 1007 is configured to receive code instructions and transmit it to the processor 1001. The processor 1001 executes the code instructions, so that the switching apparatus 1000 implements the method described in the above method embodiments.

In one implementation, the processor 1001 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit or transfer signals.

In one implementation, the switching apparatus 1000 includes a circuit for implementing the transmission, reception or communication function in the above method embodiments. The processor and the transceiver described in the embodiments of the disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The switching apparatus mentioned in the above embodiments may be a network device or a terminal device, but the scope of the switching apparatus is not limited thereto. In addition, a structure of the switching apparatus may not be limited by FIG. 8 and FIG. 9. The switching apparatus may be an independent device, or a part of a large device. For example, the switching apparatus may be:
(1) an independent IC, chip, chip system or chip sub-system;
(2) a set of one or more ICs (optionally, the IC set also includes a memory member for storing therein data and a computer program;
(3) an ASIC, e.g., a Modem;
(4) a module capable of being embedded into the other device;
(5) a receiver, a terminal device, a smart terminal device, a cellular phone, a wireless device, a handheld device, a mobile unit, a vehicle-mounted device, a network device, a cloud device, an artificial intelligence device, etc.; or
(6) the other device.

In a case that the switching apparatus is a chip or a chip system, FIG. 11 is a structural schematic diagram of the chip. As shown in FIG. 11, the chip includes a processor 1101 and an interface 1102. There may exist one or more processors 1101, and more than one interface 1102.

In a case that the chip is used to achieve the functions of the network device in the embodiments of the disclosure,
the interface 1102 is configured to receive code instructions and transmit the code instructions to the processor; and
the processor 1101 is configured to execute the code instructions to implement the method in FIGs. 2 and 3.

In a case that the chip is used to achieve the functions of the terminal device in the embodiments of the disclosure,
the interface 1102 is configured to receive code instructions and transmit the code instructions to the processor; and
the processor 1101 is configured to execute the code instructions to implement the method in FIGs. 4 and 5.

Optionally, the chip further includes a memory 1103 for storing therein necessary computer programs and data.

It should be appreciated that, various illustrative logical blocks and steps listed in the embodiments of the disclosure may be implemented by electronic hardware, computer software, or a combination thereof. Whether these functions are implemented by hardware or software depends on design requirements on an entire system and specific applications. For each specific application, various methods are used to achieve the function, which however shall not be construed as going beyond the scope of the disclosure.

The disclosure further provides a communication system, which includes the switching apparatus in FIGs. 8 and 9 as a terminal device and the switching apparatus as a network device, or includes the switching apparatus in FIG. 10 as a terminal device and the switching apparatus as a network device.

The disclosure further provides a readable storage medium storing therein instructions. The instructions, when executed by a computer, achieve the functions in any of the above-mentioned method embodiments.

The disclosure further provides a computer program product. The computer program product is executed by a computer so as to achieve the functions in any of the above-mentioned method embodiments.

In the above-mentioned embodiments of the disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the disclosure or indicating any sequence.

The expression "at least one" is used to indicate one or more, e.g., two, three, four or more, which will not be particularly defined herein. In the embodiments of the disclosure, for technical features of the same kind, the words "first", "second", "third", "A", "B", "C" and "D" are used to differentiate these technical features, without indicating any sequence or sizes thereof.

The correspondence shown in each table in the disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the disclosure, correspondences shown in some rows may not be configured. For another example, appropriate deformation or adjustment may be performed based on the table, e.g., splitting or combination. A name of each parameter in each table may use the other name capable of being understood by the communication device, and a value of the parameter or a presentation mode thereof may also use that capable of being understood by the communication device. During the implementation of each table, the other data structure may also be used, e.g., array, queue, container, stack, linear table, pointer, linked list, tree, map, structure, class, heap, or hash table.

The term "predefined" in the embodiments of the disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the disclosure.

It should be further appreciated that, for convenience and clarification, operation procedures of the system, apparatus and units described hereinabove may refer to the corresponding procedures in the method embodiments, and thus will not be particularly defined herein.

It should be appreciated that, all forms of processes shown above may be used, and steps thereof may be reordered, added or deleted. For example, as long as expected results of the technical solutions of the disclosure can be achieved, steps set forth in the disclosure may be performed in parallel, performed sequentially, or performed in a different order, and there is no limitation in this regard.

The foregoing specific implementations constitute no limitation on the scope of the disclosure. It should be appreciated that, various modifications, combinations, subcombinations and replacements may be made according to design requirements and other factors. Any modifications, equivalent replacements and improvements made without deviating from the spirit and principle of the disclosure shall be deemed as falling within the scope of the disclosure.

## Claims

1. A switching method, executed by a first terminal device, comprising:
receiving switching configuration information sent by a first network device; and
executing path switching according to the switching configuration information and based on a target relay terminal device.

2. The switching method according to claim 1, wherein the switching configuration information comprises at least one of:
an identifier of the target relay terminal device;
an identifier of at least one target cell;
an identifier of at least one target network device; or
an identifier of the first terminal device.

3. The switching method according to claim 2, wherein executing the path switching according to the switching configuration information and based on the target relay terminal device comprises:
establishing a connection with the target relay terminal device according to the switching configuration information.

4. The switching method according to any one of claims 1 to 3, further comprising:
obtaining a current serving cell and/or a current serving network device of the target relay terminal device.

5. The switching method according to claim 4, further comprising:
in response to the at least one target cell comprising the current serving cell, and/or
in response to the at least one target network device comprising the current serving network device,
establishing a connection with the current serving network device of the target relay terminal device via the target relay terminal device.

6. The switching method according to claim 4, further comprising:
in response to the at least one target cell not comprising the current serving cell, and/or
in response to the at least one target network device not comprising the current serving network device,
executing at least one of:
initiating a Radio Resource Control (RRC) connection reestablishment;
disconnecting the connection with the target relay terminal device;
recovering a connection with the first network device;
entering into an idle state; or
initiating a cell reselection.

7. The switching method according to claim 1, wherein in response to the path switching comprising switching to an indirect link, determining that the switching configuration information comprises at least one of:
an identifier of the target relay terminal device;
an identifier of at least one target cell;
an identifier of at least one target network device; or
an identifier of the first terminal device.

8. The switching method according to any one of claims 1 to 7, wherein the switching configuration information is comprised in an RRC message.

9. The switching method according to claim 8, wherein the identifier of the at least one target cell and/or the identifier of the at least one target network device are comprised in at least one of:
RRC reconfiguration information;
Sidelink (SL) path switching configuration information;
RRC synchronization reconfiguration information;
cell group configuration information; or
special cell (spCell) configuration information.

10. A switching method, executed by a first network device, comprising:
sending switching configuration information to a first terminal device;
wherein the switching configuration information is used to execute path switching based on a target relay terminal device.

11. The switching method according to claim 10, wherein the switching configuration information comprises at least one of:
an identifier of the target relay terminal device;
an identifier of at least one target cell;
an identifier of at least one target network device; or
an identifier of the first terminal device.

12. The switching method according to claim 11, wherein the switching configuration information is used by the first terminal device to establish a connection with the target relay terminal device.

13. The switching method according to claim 10, further comprising:
in response to the first terminal device being going to execute the path switching, or in response to the first terminal device being going to execute the switching to an indirect link, determining that the switching configuration information comprises at least one of:
an identifier of the target relay terminal device;
an identifier of at least one target cell;
an identifier of at least one target network device; or
an identifier of the first terminal device.

14. The switching method according to claim 13, further comprising:
in response to the first terminal device not executing the path switching based on the target relay terminal device, determining that the switching configuration information does not comprise any of:
the identifier of the target relay terminal device;
the identifier of at least one target cell;
the identifier of at least one target network device; or
the identifier of the first terminal device.

15. The switching method according to any one of claims 9 to 14, wherein the switching configuration information is comprised in an RRC message.

16. The switching method according to claim 15, wherein the identifier of the at least one target cell and/or the identifier of the at least one target network device are comprised in at least one of information:
RRC reconfiguration information;
Sidelink (SL) path switching configuration information;
RRC synchronization reconfiguration information;
cell group configuration information; or
spCell (spCell) configuration information.

17. A switching apparatus, applied to a first terminal device, comprising:
a transceiver unit configured to receive switching configuration information sent by a first network device; and
a processing unit configured to execute path switching according to the switching configuration information and based on a target relay terminal device.

18. A switching apparatus, applied to a first network device, comprising:
a transceiver unit configured to send switching configuration information to a first terminal device;
wherein the switching configuration information is used to execute path switching based on a target relay terminal device.

19. A communication device, comprising a processor and a memory, wherein the memory is configured to store a computer program, and the processor is configured to execute the computer program in the memory to cause the device to execute the switching method according to any one of claims 1 to 9.

20. A communication device, comprising a processor and a memory, wherein the memory is configured to store a computer program, and the processor is configured to execute the computer program in the memory to cause the device to execute the switching method communication according to any one of claims 10 to 16.

21. A computer-readable storage medium storing instructions, wherein, when the instructions are executed, the switching method according to any one of claims 1 to 9 is implemented.

22. A computer-readable storage medium storing instructions, wherein, when the instructions are executed, the switching method according to any one of claims 10 to 16 is implemented.
